# EUROPEAN PATENT SPECIFICATION

(11) **EP 2 136 446 B1**
(45) Date of publication and mention of the grant of the patent: **09.11.2016**
(21) Application number: 09159300.4
(22) Date of filing: 04.05.2009
(51) Int. Cl.: H02B 1/01

(54) **Structural member usable to make up the framework of switchboard cubicle.**
Zur Errichtung des Rahmengestells einer Schaltzelle verwendbares Strukturelement
Élément structurel pouvant être utilisé pour former le cadre d'une armoire de commutation

(30) Priority: 19.06.2008 IT PN20080050
(43) Date of publication of application: 23.12.2009
(73) Proprietor: Hager-Lumetal S.p.A., 33080 Porcia, Pordenone (IT)
(72) Inventor: Castria, Franco, 33080, Porcia (PN) (IT); Dal Santo, Roberto, 33080, Porcia (PN) (IT)
(74) Representative: Giugni, Valter

(56) References cited:
- DE-A1- 10 154 706
- DE-U1-202004 005 352
- US-A1- 2001 050 516
- US-A1- 2007 175 648

## Description

The present invention refers to a structural member that is adapted for use in making up the framework of a switchboard cubicle or similar enclosure for electric equipment.

Known in the art are modular cubicles, i.e. enclosures intended for housing switchgears, switchboards, digital switching equipment for telecommunications, and the like. These cubicles are built on a framework, which defines the edges and corners thereof, and which is made up by usually hollow structural members obtained by profiling and adapted to be assembled with each other. The walls of the cubicle are added afterwards by mounting the corresponding closing panels upon the framework. Mounted there are also isolating partition panels, which are provided under the closing panels and are used as a further isolation provision for more effective separation from adjacent cubicles or due protection of electric equipment mounted inside the cubicle (in this case, they may have a smaller size,
i.e. be shorter than the side of the cubicle). A door, duly hinged on the framework, completes the cubicle to ensure both increased protection thereof and controlled access thereinto.

An example of a structural member of the above-cited kind is described in EP 0 829 190 (to Rittel-Werk). Such structural member is designed to solely and in all cases make up an upright stanchion of a cubicle, and has to be mounted in a preestablished, fixed arrangement (the same face of the member has to be arranged so as to always face inwardly, i.e. the interior of the cubicle). The member has an outer surface that is contoured so as to facilitate attaching and securing closing panels and/or hinging-on a door thereto, wherein the closing panels are to be attached and fastened upon a pre-established rest-on surface and the corner of a sharp, blade-like folding.

Illustrated in EP 1 897 465 (to this same Applicant) there is another structural member, which is able to be arranged both vertically and horizontally. By means of appropriate corner joints, these structural members -all identical to each other are assembled with and attached to each other to form the framework of the cubicle.

As in the formerly considered case, this structural member has a constant, substantially polygonal cross-sectional shape and a contour that comprises a dihedral angle on the one side, the walls of which act as support points inside the cubicle for partition or isolation panels or support bars, and two perpendicular reston walls for a respective closing panel on the other side, which are parallel to the walls formed by the dihedral angle.

Both in EP 0 829 190 and EP 1 897 465, there are two rest-on walls, i.e. one for each panel.

US2001/0050516 discloses a vertical frame construction with vertical structural members comprising several parallel walls.

A problem typically encountered with cubicles of this kind lies in the fact that the isolation panels have to be mounted by gaining access into the cubicle, i.e. from the interior thereof, and command a definite sequence to be followed for mounting them, since a variety of intermediate members, such as brackets or hook-on means, are required to secure them to the structural member (usually to the walls of the internal dihedron). Another option lies in using sheets folded into a L-shape as isolation panels, wherein the folded edge of such L-shaped sheets is used for fixing on to the internal dihedron of the structural member. In this case, however, the sheet folding process is expensive and must necessarily be carried out at the factory, so that the end user is not in a position as to conveniently and easily adapt the size of the isolation panels according to individual needs or requirements.

It is a main object of the present invention to solve this problem by providing a structural member by means of which a cubicle of the above-noted kind can be assembled in a simpler, more convenient and quicker manner.

According to the present invention, this aim is reached in a structural member for making up and building the framework of a switchboard or similar cubicle, which has an elongated longitudinal extension and is constant, substantially polygonal in the cross-sectional shape thereof to thereby form a contour comprising an angle on the one side, the walls of which act as support points inside the cubicle for partition or isolation panels and/or support bars, and two perpendicular rest-on walls for a respective closing panel on the other side, which are parallel to the walls formed by the angle, characterized in that said contour is shaped so as to obtain, for one or each of the rest-on walls, an auxiliary rest-on wall lying adjacent and extending parallel thereto, and offset inwardly relative to the structural member, said auxiliary wall being adapted to support a complement under the closing panel.

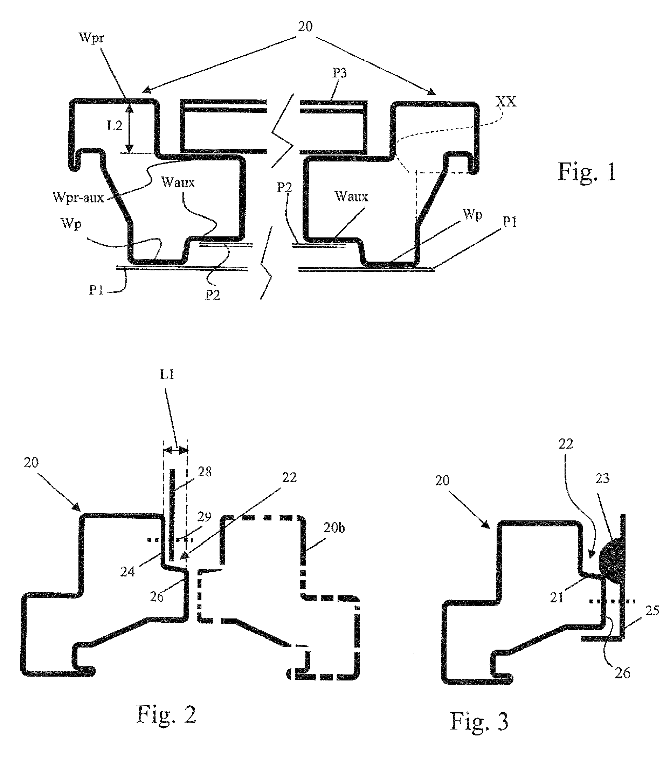

The contour of a structural member 20 according to the present invention is shown in Figure 1, wherein the portion indicated at XX with a dashed line represents the contour as this might be, actually, in a more general configuration thereof. The contour 20 has a main rest-on wall Wp for an outer panel P1 to rest thereon. Near this main wall, and more inwardly relative thereto, there is provided a second auxiliary wall Waux, onto which there can for example be attached a second closing panel P2 located more internally. When two such structural members 20 are shown assembled together - as in Figure 1 - so as to form a side of the cubicle, it can be readily noticed that the two panels P1 and P2 are lying above each other and are mounted or, anyway, capable of being mounted from a same side, for a greatly improved installation convenience. The walls Wp and Waux substantially form a step-like configuration. The height difference L 1 between such two walls Wp and Waux, i.e. the depth of said step-like configuration, can most advantageously be selected so as to be equal to the size of standard fastening members (screws, nuts, bolts and similar fasteners).

On the opposite side of the structural member 20 there is provided a second step-like configuration at a substantially right angle formed by walls Wpr, Wpr-aux extending parallel to each other along different planes. Also on this side of the structural member 20, when and if it forms the side of the cubicle being considered, the possibility is given for a closing element P3 (such as for example a panel or a bar) to be fastened thereto, which will therefore turn out as being fitted into the second step, while lying flush with the surface Wpr.

The distance L2 between the walls Wpr, Wpr-aux (and, therefore, the depth of the second step) may most advantageously be such as to comply with usual industry standards, e.g. DIN standards. The possibility arises in this way for also standard bars and/or panels, as these are readily available on the market, to be fastened on to the wall Wpr-aux, without any need arising at all for the installer to specially manufacture anything to comply with particular requirements. In other words, it is not only sufficient to just purchase a bar and cut it to the desired length (without any auxiliary elements such as brackets or spacers) for it to be secured to the wall Wpr-aux, but it can also be taken for sure that the thickness of such bar will in all cases be able to be perfectly accommodated into the same step-like configuration, without protruding into, i.e. taking up any space in the interior volume of the cubicle. As a matter of fact, if such bar is mounted so as to protrude into the interior volume of the cubicle to any extent, this would quite obviously turn out as a hindrance to a convenient installation of the electric equipment inside the cubicle and/or reduce the useful capacity of the same cubicle.

Further features, advantages and aspects of the present invention will anyway be more readily understood from the description of a structural member in a preferred embodiment thereof, which is given below by way of non-limiting example with reference to the accompanying drawings, in which:
- Figure 1 is a view of two structural members according to the present invention;
- Figures 2 and 3 are schematical views of the assembly of the structural member shown in Figure 1;
- Figures 4, 5 and 6 are assembly schematics for a further side of the structural member shown in Figure 1;
- Figure 7 is a view of the structural member shown in Figure 1 in the condition in which it is standing, i.e. resting on the floor;
- Figure 8 is a cross-sectional view of the structural member shown in Figure 1 in the condition in which it is connected to two same members;
- Figure 9 is a perspective view of the structural member shown in Figure 1 as connected to other similar members to form the framework of a cubicle.

Figure 2 is a cross-sectional view of a structural member 20, as the latter would be viewed according to a horizontal section when it is arranged vertically. On a side thereof there is provided a step-like configuration 22, which is formed by two planar walls 24, 26 extending parallel to each other, wherein the second one of such walls juts out, i.e. overhangs relative to the first one by a distance (or depth) L1. The wall 24 acts as a support/rest-on means for an isolation panel 28 that is secured thereto by means of a screw 29 (dashed segments are used in the Figures to indicate screws or similar fastening means). It should be noticed that the distance L1 is designed to be greater than or equal to a common screw head, so that the latter will not jut out, thereby allowing another similar structural member 20b to be placed to rest thereagainst without any obstruction or contrast opposing a perfect juxtaposition (see member 20b indicated by dot-dash line in Figure 2).

In the prior art, structural members did on the contrary not create or provide any step-like configuration to accommodate for a panel to be fastened thereto, so that alignment problems unavoidably arise whenever cubicles are to be installed in a juxtaposed, i.e. side-by-side arrangement.

Illustrated in Figure 3 there is another practical function provided on the same side, with the structural member 20 set again vertically, i.e. in a standing position. It can be readily noticed that the gasket 23 of a covering panel 25 can be conveniently accommodated in the step-like configuration 22. The portion or length 21 that joins the walls 24, 26 with each other may be slightly sloping, i.e. inclined relative to a plane extending orthogonally thereto, so as to enhance the sealing effect and enable the gasket 23 to more effectively rest thereagainst (the abutment of the gasket against the step-like configuration is optimized). It can also be readily noticed that no need arises for spacer members to be used between the panel 25 and the wall 26, since the outer volume of the gasket 23 is fully contained in the angle formed by the step 22. The angle between the wall 24 and the portion 21 may for instance be situated anywhere between 110 and 140 degrees.

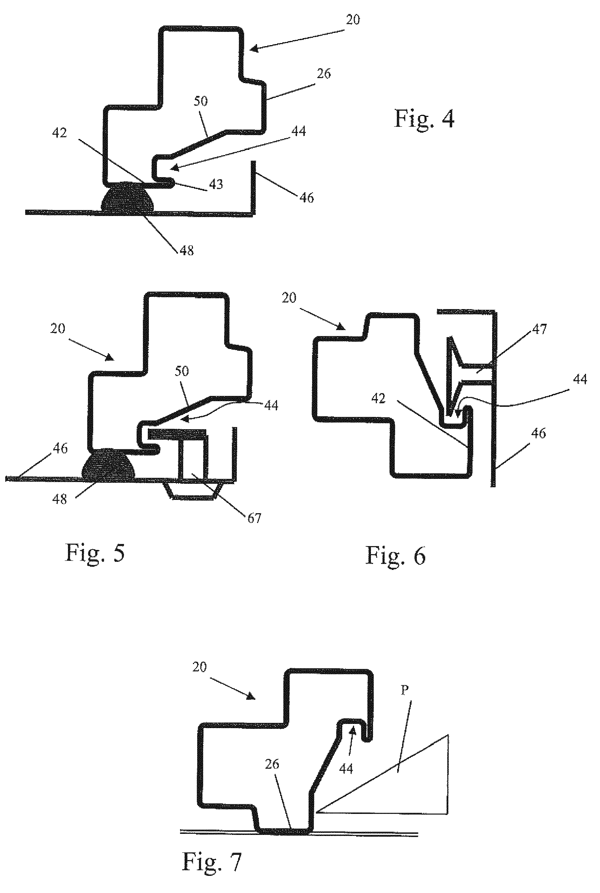

Figure 4 illustrates the advantageous utilization and conformation of another side of the structural member 20, which is offset by an angle of 90 degrees relative to the side described above. The structural member 20 shall be considered as being set vertically. There is provided a resting wall 42, which is planar and acts as a corner piece, and which bends into a prominent lip 43 to thereby form a small channel 44, from the end portion of which there extends an inclined joining wall 50 that joins into the wall 26. The wall 42 acts as a support for the gasket 48 of an upright covering wall 46 to rest thereagainst. Figure 5 illustrates the usefulness, i.e. practical purpose of the small channel 44, which may in fact be advantageously used as a hook-up receptacle for a latch or similar fastening device 67.

Figure 6 still illustrates the use of the same side of the structural member 20, wherein the latter shall in this case be however considered as being arranged horizontally, on top (therefore, the same member can be used both in a vertical and horizontal arrangement -see also Figure 7). The panel 46 can be suspended, in a very convenient manner, by inserting a rivet (or similar peg or pin) 47 in the channel 44: the assembly work required to mount the panel 46 is therefore made considerably easier, since the panel is practically self-sustaining.

Shown in Figure 7 is a combined utilization of the adjacent sides of the structural member 20. The wall 26 may be used as the base or socle for the cubicle to rest on the floor, or similar support surface, in the case that the structural member 20 is arranged horizontally. Apart from the fact that this enables the entire cubicle to be kept separated from the ground or floor, i.e. in a raised position relative thereto, the adjacent side of the structural member 29 (where there is provided the channel 44) provides a catch corner for a lifting hook of a hoisting apparatus or, for example, the prongs P of a forklift truck to engage it.

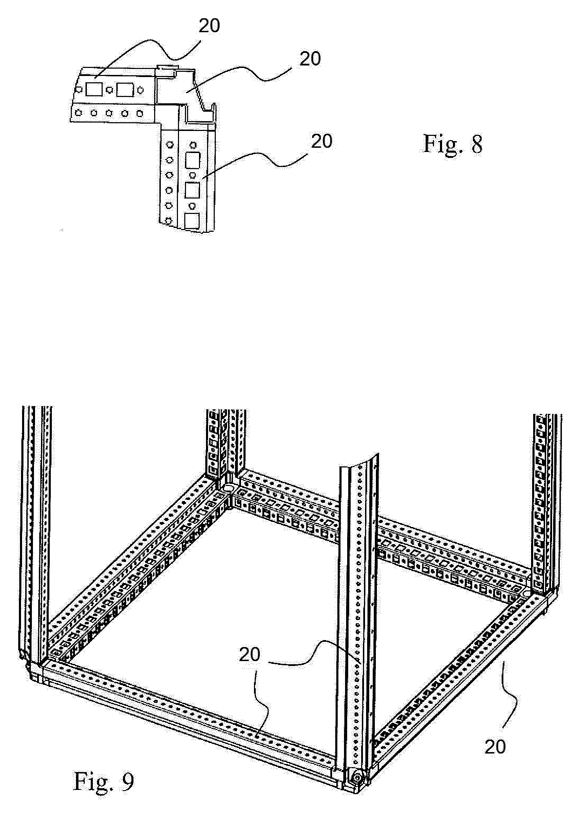

Figures 8 and 9 finally illustrate the manner in which the structural members 20 connect with each other. In particular, Figure 8 is a cross-sectional view of three structural members 20 spatially connected to each other in a two-by-two arrangement at an angle of 90° relative to each other. In this connection, it should be noticed that the illustration in Figure 8 represents a section of a cubicle made to include both a vertical and a horizontal plane. This feature can be more readily appreciated in the illustration of Figure 9 showing the overall structure of the base of the framework of a cubicle, which is solely made up by structural members 20 and connecting corner joints. When the illustration in Figure 9 is turned upside down, this would provide a mirror view of the top side of the same cubicle framework.

Further advantageous optional features are obtained by:
- providing the wall 50 with fastening means for a hinging pintle or, more generally, a support/connection member;
- providing the walls of said angle and/or the rest-on walls and/or the auxiliary walls with pre-punched knockouts or similar partially cutout pieces to be forced out when a hole is needed.

## Claims

1. Structural member (20) making up both the vertical and the horizontal members of a framework of a switchboard cubicle, having an elongated longitudinal dimension and constant cross-section, and a polygonal (Wpr, Wpr-aux, Wp, Waux, 21, 24, 26, 42, 50, 44) contour, two of the walls (Wpr, Wpr-aux) of the structural member (20) being parallel to each other and acting as support walls inside the cubicle for partition panels and/or support bars (P3), and two parallel rest-on walls (Wp, Waux, 24, 26) on the opposite side of the structural member (20) which are parallel to the inside walls (Wpr, Wpr-aux), one rest-on wall (Wp, 26) for attaching a closing outer panel (P1), said contour is shaped so as to obtain the auxiliary rest-on wall (Waux, 24) lying adiacent and offset inwardly relative to the other rest-on wall (Wp, 26) said auxiliary wall (Waux, 24), being adapted to support a complementary panel (P2) under the closing panel (P1), **characterized in that** the main rest-on wall (Wp, 26) and the respective auxiliary one (Waux, 24) are joined with each other via a joining portion (21), and **in that** said joining portion (21) is inclined by a certain angle relative to a plane extending orthogonally to said main and auxiliary rest-on walls (Wp, Waux, 24, 26).

2. Structural member according to claim 1, wherein said angle is such as to confer convexity to the joining surface between said walls (Wp, Waux) and said joining portion (21).

3. Structural member according to claim 1, wherein the distance (L1) between a rest-on wall (Wp) and the related auxiliary wall (Waux) is sized to DIN industry standards applying to the sizes of bars and/or panels and/or brackets.

4. Structural member according to claim 1, wherein a rest-on wall (42) is provided with a folded portion (43) forming a prominent lip into the cross-section of the structural member (20).

5. Structural member according to claim 4, wherein said lip (43) is a prolongation of the rest-on wall (42) extending parallel thereto.

6. Structural member according to claim 4 or 5, comprising a U-shaped concavity (44) in the cross-section thereof, of which said lip (43) forms a side wall, so that the structural member turns out as being provided with a longitudinal, open channel (44).

7. Structural member according to any of the preceding claims, comprising an intermediate wall (50) between said rest-on walls (26,42), said intermediate wall (50) being inclined relative to said rest-on walls and being provided with securing means (67) for the attachment of a support/connection member.

8. Structural member according to any of the preceding claims, comprising pre-punched knockout holes on the walls of said angle and/or the rest-on walls (Wp) and/or the auxiliary walls (Waux).

9. Structural member according to any of the preceding claims, wherein said complementary panel is a further closing panel (P2).

10. Structural member according to any of the preceding claims, wherein the depth of said angle is in compliance with industry standards applying to the sizes of bars and/or panels and/or brackets.

## Patentansprüche

1. Strukturelles Element (20), das sowohl die vertikalen als auch die horizontalen Elemente eines Rahmens eines Schaltschranks bildet, eine längliche Abmessung in Längsrichtung sowie einen konstanten Querschnitt und einen polygonalen (Wpr, Wpr-aux, Wp, Waux, 21, 24, 26, 42, 50, 44) Umriss hat, wobei zwei der Wände (Wpr, Wpr-aux) des strukturellen Elementes (20) parallel zueinander sind und als Stützwände im Inneren des Schranks für Trennplatten und/oder Trageschienen (P3) dienen, sowie zwei parallele Auflagewände (Wp, Waux, 24, 26) an der gegenüberliegenden Seite des strukturellen Elementes (20), die parallel zu den Innenwänden (Wpr, Wpr-aux) sind, wobei eine Auflagewand (Wp, 26) zum Anbringen einer verschließenden äußeren Platte (P1) dient und der Umriss so geformt ist, dass die Zusatz-Auflagewand (Waux, 24) gebildet wird, die an die andere Auflagewand (Wp, 26) angrenzt und relativ dazu nach innen versetzt ist, wobei die Zusatz-Wand (Waux, 24) so eingerichtet ist, dass sie eine komplementäre Platte (P2) unter der verschließenden Platte (P1) trägt, **dadurch gekennzeichnet, dass** die Haupt-Auflagewand (Wp, 26) und die entsprechende Zusatz-Wand (Waux, 24) über einen Verbindungsabschnitt (21) miteinander verbunden sind und dass dieser Verbindungsabschnitt (21) um einen bestimmten Winkel relativ zu einer Ebene geneigt ist, die sich rechtwinklig zu der Haupt- und der Zusatz-Auflagewand (Wp, Waux, 24, 26) erstreckt.

2. Strukturelles Element nach Anspruch 1, wobei der Winkel so ist, dass er der Verbindungsfläche zwischen den Wänden (Wp, Waux) und dem Verbindungsabschnitt (21) Konvexität verleiht.

3. Strukturelles Element nach Anspruch 1, wobei der Abstand (L1) zwischen einer Auflagewand (Wp) und der dazugehörigen Zusatz-Wand (Waux) gemäß DIN-Industriestandards bemessen ist, die für die Größen von Schienen und/oder Platten und/oder Trägern gelten.

4. Strukturelles Element nach Anspruch 1, wobei eine Auflagewand (42) mit einem um gebogenen Abschnitt (43) versehen ist, der einen in den Querschnitt des strukturellen Elementes (20) hinein vorstehenden Rand bildet.

5. Strukturelles Element nach Anspruch 4, wobei der Rand (43) eine Verlängerung der Auflagewand (42) ist, die sich parallel dazu erstreckt.

6. Strukturelles Element nach Anspruch 4 oder 5, das eine U-förmige Konkavität (44) in seinem Querschnitt umfasst und der Rand (43) eine Seitenwand derselben bildet, so dass das strukturelle Element als mit einer in Längsrichtung verlaufenden offenen Rinne (44) versehen erscheint.

7. Strukturelles Element nach einem der vorangehenden Ansprüche, das eine Zwischenwand (50) zwischen den Auflagewänden (26, 42) umfasst, wobei die Zwischenwand (50) relativ zu den Auflagewänden geneigt ist und mit Befestigungseinrichtungen (67) für die Anbringung eines Trage-/Verbindungselementes versehen ist.

8. Strukturelles Element nach einem der vorangehenden Ansprüche, das vorgestanzte Ausdrücklöcher an den Wänden des Winkels und/oder den Auflagewänden (Wp) und/oder den Zusatz-Wänden (Waux) umfasst.

9. Strukturelles Element nach einem der vorangehenden Ansprüche, wobei die komplementäre Platte eine weitere verschließende Platte (P2) ist.

10. Strukturelles Element nach einem der vorangehenden Ansprüche, wobei die Tiefe des Winkels Industriestandards entspricht, die für die Größen von Schienen und/oder Platten und/oder Trägern gelten.

## Revendications

1. Elément structurel (20) constituant à la fois les éléments verticaux et horizontaux d'un cadre d'une armoire de commutation, ayant une dimension allongée longitudinale et une section transversale constante, et un contour polygonal (Wpr, Wpr-aux, Wp, Waux, 21, 24, 26, 42, 50, 44), deux des parois (Wpr, Wpr-aux) de l'élément structurel (20) étant parallèles entre elles et agissant en tant que parois de support à l'intérieur de l'armoire pour des panneaux de cloison et / ou des barres de support (P3), et deux parois de repos (Wp, Waux, 24, 26) parallèles sur le côté opposé de l'élément structurel (20) qui sont parallèles aux parois internes (Wpr, Wpr-aux), une paroi de repos (Wp, 26) pour fixer un panneau extérieur de fermeture (P1), ledit contour est conformé de manière à obtenir la paroi de repos auxiliaire (Waux, 24) s'étendant adjacente et décalée vers l'intérieur par rapport à l'autre paroi de repos (Wp, 26), ladite paroi auxiliaire (Waux, 24) étant adaptée pour supporter un panneau complémentaire (P2) sous le panneau de fermeture (P1), **caractérisé en ce que** la paroi de repos principale (Wp, 26) et la paroi de repos auxiliaire respective (Waux, 24) sont reliées entre elles par une partie de jonction (21), et **en ce que** ladite partie de jonction (21) est inclinée d'un certain angle par rapport à un plan orienté perpendiculairement auxdites parois de repos principale et auxiliaire (Wp, Waux, 24, 26).

2. Elément structurel selon la revendication 1, dans lequel ledit angle est de nature à conférer une convexité à la surface de jonction entre lesdites parois (Wp, Waux) et ladite partie de jonction (21).

3. Elément structurel selon la revendication 1, dans lequel la distance (Ll) entre une paroi de repos (Wp) et la paroi auxiliaire connexe est dimensionnée selon les normes DIN industrielles applicables aux dimensions des barres et / ou des panneaux et / ou des supports.

4. Elément structurel selon la revendication 1, dans lequel une paroi de repos (42) est pourvue d'une partie repliée (43) formant une lèvre proéminente dans la section transversale de l'élément structurel (20).

5. Elément structurel selon la revendication 4, dans lequel ladite lèvre (43) est un prolongement de la paroi de repos (42) parallèle à celle-ci.

6. Elément structurel selon la revendication 4 ou 5, comprenant une concavité en forme de U (44) dans la section transversale de celle-ci, dont la lèvre (43) forme une paroi latérale, de sorte que l'élément structurel se révèle comme étant pourvu d'un canal longitudinal ouvert (44).

7. Elément structurel selon l'une quelconque des revendications précédentes, comprenant une paroi intermédiaire (50) entre lesdites parois de repos (26, 42), ladite paroi intermédiaire (50) étant inclinée par rapport auxdites parois de repos et étant munie de moyens de fixation (67) pour la fixation d'un élément de support / élément de connexion.

8. Elément structurel selon l'une quelconque des revendications précédentes, comprenant des trous débouchant pré-percés sur les parois dudit angle et / ou les parois de repos (Wp) et / ou les parois auxiliaires (Waux).

9. Elément structurel selon l'une quelconque des revendications précédentes, dans lequel ledit panneau complémentaire est un autre panneau de fermeture (P2).

10. Elément structurel selon l'une quelconque des revendications précédentes, dans lequel la profondeur dudit angle est conforme aux normes industrielles applicables aux dimensions des barres et / ou des panneaux et / ou des supports.
